(19) Europäisches Patentamt
European Patent Office
Office européen des brevets

(11) **EP 2 203 243 B1**

(12) **FASCICULE DE BREVET EUROPEEN**

(45) Date de publication et mention
de la délivrance du brevet:
**16.03.2011 Bulletin 2011/11**

(51) Int Cl.:
***B01D 61/18*** *(2006.01)*     ***B01D 61/20*** *(2006.01)*
***B01D 61/22*** *(2006.01)*     ***B01D 65/08*** *(2006.01)*
***C02F 1/44*** *(2006.01)*     ***C02F 1/52*** *(2006.01)*

(21) Numéro de dépôt: **08867103.7**

(22) Date de dépôt: **14.10.2008**

(86) Numéro de dépôt international:
**PCT/FR2008/001438**

(87) Numéro de publication internationale:
**WO 2009/083670 (09.07.2009 Gazette 2009/28)**

(54) **PROCEDE DE GESTION AVANCEE D'UNE UNITE DE FILTRATION SUR MEMBRANE, ET INSTALLATION POUR LA MISE EN OEUVRE DU PROCEDE.**

VERBESSERTES STEUERVERFAHREN FÜR EINE MEMBRANFILTERUNGSEINHEIT UND VORRICHTUNG ZUR ANWENDUNG DIESES VERFAHRENS

ADVANCED CONTROL METHOD FOR A MEMBRANE FILTRATION UNIT, AND DEVICE FOR IMPLEMENTING THE METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.10.2007 FR 0707323**

(43) Date de publication de la demande:
**07.07.2010 Bulletin 2010/27**

(73) Titulaire: **DEGREMONT**
**92500 Rueil-Malmaison (FR)**

(72) Inventeur: **LANGLAIS, Chrystelle**
**F-78230 Le Pecq (FR)**

(74) Mandataire: **Michardière, Bernard et al
Cabinet Armengaud Aîné
3, Avenue Bugeaud
75116 Paris (FR)**

(56) Documents cités:
**WO-A-01/41906**     **WO-A-2004/022491**
**FR-A- 2 864 068**     **GB-A- 2 273 885**
**US-A- 4 772 385**

**Description**

L'invention est relative à un procédé de gestion avancée d'une unité de filtration sur membrane, appliqué au traitement de tout effluent, mettant en oeuvre une microcoagulation sur membrane selon le brevet EP 1 239 943, issu de la demande WO 01/41906, dont est titulaire la demanderesse.

La prévention du colmatage des membranes de micro-, ultra-, nano- et hyperfiltration pour le traitement des liquides tels que, notamment, les eaux de surface, les eaux résiduaires ou les eaux de mer, est un enjeu technique et économique majeur bien connu de l'homme du métier.

Pour répondre à cet objectif, la demanderesse est titulaire du brevet EP 1 239 943 qui consiste à injecter en amont de la membrane, un ou des réactifs de coagulation à une dose très faible, très en deçà des pratiques de l'homme du métier, à savoir 30 à 80 fois inférieure à la dose optimale jar test (essai de coagulation) annulant le potentiel Zéta. L'injection du/des réactif(s) pratiquée selon EP 1 239 943 induit une réduction significative de l'encrassement de la membrane, qui se traduit par une augmentation de la perméabilité de la membrane, c'est-à-dire du débit d'effluent passant par unité de surface ($m^2$) de ladite membrane, pour une pression transmembranaire normalisée de 1 bar, à une température donnée.

EP 1 239 943 enseigne une microcoagulation selon une plage de dosage qui assure un fonctionnement satisfaisant, sans toutefois assurer une optimisation du dosage. Il en résulte, pour un dosage non optimisé sur la dite plage, des performances de la membrane inférieures à celles qu'il est possible d'atteindre. En outre, dans le cas d'un surdosage du réactif sur la dite plage il y a surcoût économique et risque de bouchage de la membrane.

La présente invention a pour but, surtout, d'optimiser en temps réel la dose injectée du ou des réactif(s) de coagulation, lors de la mise en oeuvre du procédé de microcoagulation sur membrane défini précédemment, en intégrant en continu les variations de la qualité de l'effluent et/ou des retours de marche du procédé et de l'installation mettant en oeuvre ce procédé.

L'invention vise à atteindre ces objectifs de façon à obtenir en temps réel des performances quasi optimales de la membrane de façon automatique, en évitant ou en supprimant toute intervention humaine. En cela, la présente invention concerne un procédé de conduite optimisé, fiabilisé et sécurisé d'une unité de filtration sur membrane.

Un procédé selon l'invention de gestion avancée d'une unité de filtration, appliqué au traitement de tout effluent, mettant en oeuvre une microcoagulation sur membrane, consiste à injecter en amont de la membrane une dose de réactif(s) de coagulation 30 à 80 fois inférieure à la dose annulant le potentiel Zéta de l'effluent, et est caractérisé en ce que :

- on mesure, en tant que variables d'entrée, des grandeurs définissant la qualité de l'effluent et des grandeurs définissant l'état d'encrassement de la membrane ;
- on situe le point de fonctionnement du procédé de microcoagulation à partir des résultats des mesures précédentes et on détermine des seuils pour les variables d'entrée dont le franchissement doit déclencher la microcoagulation,
- et, selon les résultats des mesures et de la comparaison des variables d'entrée avec les seuils respectifs, on pilote l'injection du/des réactif(s) de coagulation.

De préférence, les grandeurs mesurées pour définir la qualité de l'effluent à traiter comprennent au moins une des grandeurs suivantes :

- la température,
- la teneur en matière organique, en particulier mesures du COT et /ou de l'absorbance UV et/ou de l'indice de colmatage,
- la teneur en matières en suspension et/ou colloïdales, en particulier mesures de la turbidité et/ou du potentiel Zéta et/ou le comptage de particules.

Les grandeurs mesurées pour définir l'état d'encrassement de la membrane comprennent, avantageusement, au moins les grandeurs suivantes :

- le débit instantané $Q_{EB}$ de l'effluent traité sur l'étage de membrane ;
- le débit d'injection $Q_R$ du ou des réactifs de coagulation
- la pression transmembranaire PTM.

De préférence, le point de fonctionnement est situé par détermination du réactif adapté à l'effluent mesuré et par détermination de la plage de variation de la dose de réactif.

Le point de fonctionnement peut être situé à partir d'un tableau de paramétrage faisant correspondre à des types d'effluents, définis par des plages de valeurs de grandeurs caractéristiques, des réactifs de coagulation adaptés et des plages de dosage appropriées.

Le point de fonctionnement peut être déterminé par un système expert qui sélectionne le/les réactifs appropriés à l'effluent mesuré, et en détermine, par modélisation, la gamme de variation de dosage pour tendre vers le point de fonctionnement optimal.

Le dosage du réactif peut être réglé par asservissement sur le débit d'effluent traité.

Avantageusement, le dosage du réactif peut être assuré par régulation avec injection d'une dose minimale et augmentation pas à pas de la dose aussi longtemps que l'augmentation de la dose produit une augmentation de la perméabilité de la membrane, et arrêt de l'augmentation de la dose injectée de réactif lorsqu'une diminution de la perméabilité de la membrane fait suite à une augmentation de la dose.

On peut réguler l'injection du/des réactif(s) de coagulation en fonction des retours de fonctionnement de la membrane, significatifs de son encrassement, pour tendre vers le point de fonctionnement optimal.

Lorsqu'un doute est émis sur la validité ou la représentativité d'un des signaux d'entrée ou lorsqu'une anomalie dans les retours de marche intervient, le pilotage de l'unité de membrane peut être effectué selon un mode de gestion de repli de la station. Le mode de gestion de repli est une gestion par asservissement avec un taux de traitement fixe. En variante, le mode de gestion de repli est un arrêt de la mise en oeuvre de la dite invention.

Avantageusement, on adapte selon les consignes les paramètres de fonctionnement de la membrane visant à éliminer/contrôler/maîtriser l'accumulation de matière au voisinage de la membrane. Les paramètres de fonctionnement préférentiellement ajustés sont la procédure, la durée et la fréquence des rétrolavages et des lavages ainsi que le choix des réactifs associés. Ainsi, par exemple, des rétrolavages diphasiques pulsés tels que décrits par FR 2 867 394, dont est titulaire la demanderesse, pourront avantageusement être mis en oeuvre. De même, la nature du/des réactif(s) de lavages sera sélectionnée pour ses propriétés oxydantes ou chélatantes ou acido-basiques par exemple pour favoriser l'élimination du/des réactif(s) de coagulation mis en oeuvre selon la présente invention.

On peut aussi adapter selon les consignes les paramètres de fonctionnement de la filière de traitement, notamment la gestion des rejets contenant le/les réactifs de coagulation. En effet, la présence de réactif(s) de coagulation dans les eaux de lavage de la membrane induite par la mise en oeuvre de la présente invention, peut être problématique pour un rejet direct dans l'environnement ou un recyclage sur la filière de traitement. Dans ce cas, il peut y avoir nécessité de démarrer une filière de traitement spécifique de ces eaux de lavage. Ces traitements sont connus de l'homme de l'art, et font appel aux techniques de décantation ou flottation ou centrifugation ou filtration sur media, sur grille, sur toile ou sur membrane par exemple.

L'invention est également relative à une installation pour la mise en oeuvre du procédé, comportant au moins une unité de filtration sur membrane, appliqué au traitement d'un effluent, mettant en oeuvre une microcoagulation sur membrane comprenant des moyens pour injecter en amont de la membrane une dose de réactif(s) de coagulation 30 à 80 fois inférieure à la dose annulant le potentiel Zéta de l'effluent, caractérisée en ce qu'elle comporte un ensemble de commande comprenant:

- des moyens de mesure, en tant que variables d'entrée, des grandeurs définissant la qualité de l'effluent à traiter et des grandeurs définissant l'état d'encrassement de la membrane ;
- une unité pour situer le point de fonctionnement du procédé de microcoagulation à partir des résultats des mesures précédentes et pour déterminer des seuils pour les variables d'entrée dont le franchissement doit déclencher la microcoagulation,
- un module d'analyse des résultats de mesures et de comparaison des variables d'entrée avec les seuils respectifs,
- et un module pour piloter l'injection du/des réactif(s) de coagulation.

L'unité peut comprendre un bloc affecté aux variables d'entrée procédé et un bloc auquel sont envoyées des informations sur des grandeurs d'entrée spécifiques à la ou aux membranes utilisées, à savoir données de fonctionnement des membranes/retour de marche.

Le bloc affecté aux variables d'entrée reçoit des informations fournies par la mesure de grandeurs caractéristiques de la qualité de l'effluent en amont de la membrane comprenant au moins l'une des grandeurs suivantes :

- la température de l'effluent, fournie par un capteur ;
- la teneur en matière organique de l'effluent fournie par un capteur par mesure du COT (carbone organique total) et/ou de l'absorbance UV et/ou de l'indice de colmatage,
- la teneur en matières en suspension et/ou colloïdales, fournie par un capteur, par mesures de la turbidité et/ou du potentiel Zéta et/ou par comptage de particules,

les capteurs étant disposés dans la conduite d'arrivée de l'effluent.

Le bloc, auquel sont envoyées des informations sur des grandeurs d'entrée spécifiques à la ou aux membranes utilisées, reçoit des informations fournies par la mesure de grandeurs caractéristiques de l'état de la membrane, comprenant au moins les grandeurs suivantes:

- le débit instantané ($Q_{EB}$) de l'effluent traité sur l'étage de membrane fourni par un débitmètre installé sur la conduite d'entrée de l'effluent à traiter ;
- le débit d'injection ($Q_R$) du ou des réactif(s) de coagulation, fourni par un débitmètre installé sur la conduite d'injection du réactif de coagulation ;
- la pression transmembranaire PTM (en bars) fournie par deux capteurs de pression disposés de part et d'autre de la membrane.

L'installation peut comporter des moyens d'entrée pour permettre à l'utilisateur d'entrer des consignes/seuils de valeurs des variables, pour définir le domaine d'application de la microcoagulation sur membrane par rapport à la nature et la qualité de l'effluent et à la technologie membranaire.

De préférence, le module pour situer, à partir des consignes et des variables d'entrée, le point de fonctionnement du procédé de microcoagulation sur membrane est prévu pour assurer le traitement des informations:

- soit par un bloc dans lequel est mémorisé un tableau de paramétrage en fonction de la qualité de l'effluent, qui permet, selon les données fournies relativement à l'effluent, de fournir les consignes sur l'emploi préférentiel d'un/des réactif(s) et sur la plage de dosage optimale pour ce ou ces réactifs ;
- soit par un bloc comportant un système expert comportant des moyens de calcul et un logiciel pour modéliser par des règles d'expertise la courbe d'annulation du potentiel Zéta en fonction de la dose du ou des réactif(s) et définir ainsi pour un réactif ou un mélange de réactifs les variables X, puis X/30 et X/80.

L'ensemble de commande comprend avantageusement un module de commande du débit d'injection du ou des réactif(s) de coagulation selon les besoins renseignés. Le module de commande se décompose en deux blocs logiques de commande activés, selon la disponibilité des informations, pour le pilotage des équipements d'injection du ou des réactifs de coagulation,

- un bloc logique de commande étant prévu pour assurer un fonctionnement de l'injection de réactif selon un mode d'asservissement ,
- l'autre bloc logique de commande étant prévu pour assurer un fonctionnement de l'injection de réactif selon un mode de régulation.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :

Fig. 1 est un schéma d'une installation avec membrane en carter en circulation mettant en oeuvre le procédé selon l'invention.
Fig. 2 est un schéma d'une installation avec membrane sans carter immergée mettant en oeuvre le procédé selon l'invention.
Fig. 3 est un exemple de traitement d'une courbe d'annulation du potentiel Zéta d'un effluent donné en fonction de la dose d'un réactif de coagulation portée en abscisse selon une échelle logarithmique tandis que le potentiel Zéta est porté en ordonnée en millivolts.
Fig. 4 est un schéma illustrant la variation de perméabilité de la membrane en fonction de la dose de réactif injectée pour un effluent donné.
Fig. 5 est un schéma synoptique du dispositif mettant en oeuvre le procédé de l'invention.
Fig. 6 est un ordinogramme du procédé de l'invention.
Fig.7 est une variante de l'ordinogramme de Fig.6, et
Fig.8 est un diagramme illustrant les résultats d'un exemple de mise en oeuvre du procédé de gestion de l'invention.

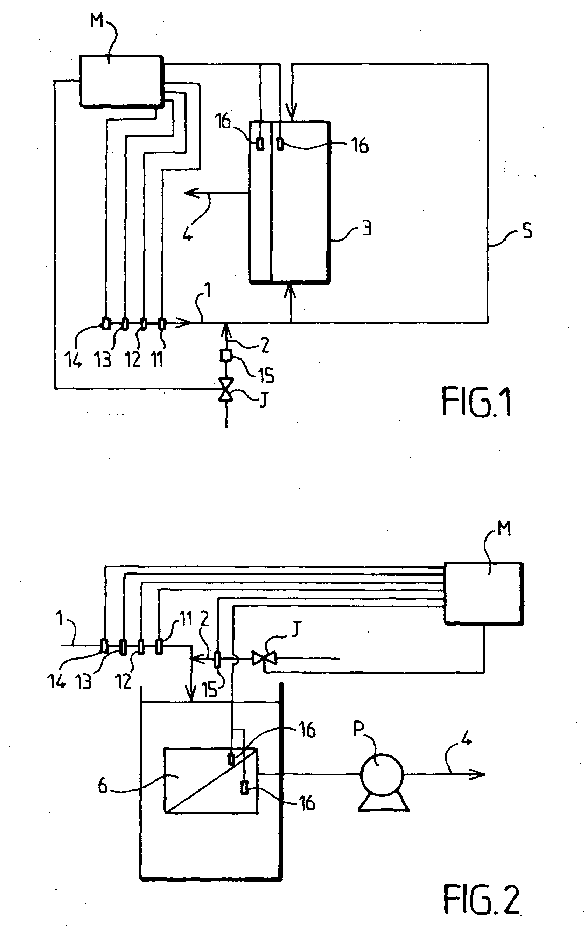

En se reportant à Fig. 1 on peut voir une installation de filtration d'une eau à traiter 1 dans laquelle un réactif coagulant est injecté en 2, en amont de la membrane de filtration en carter 3. Le mélange eau à traiter-réactif coagulant est filtré sur la membrane en carter 3 et l'eau traitée sort par une conduite 4. L'installation peut comporter une boucle de recirculation 5.

Dans l'installation selon Fig. 2, le mélange eau à traiter 1-réactif coagulant 2 est filtré sur une membrane 6, sans carter, immergée dans un bassin contenant l'eau à traiter. L'eau traitée 4 est évacuée à l'aide d'une pompe P.

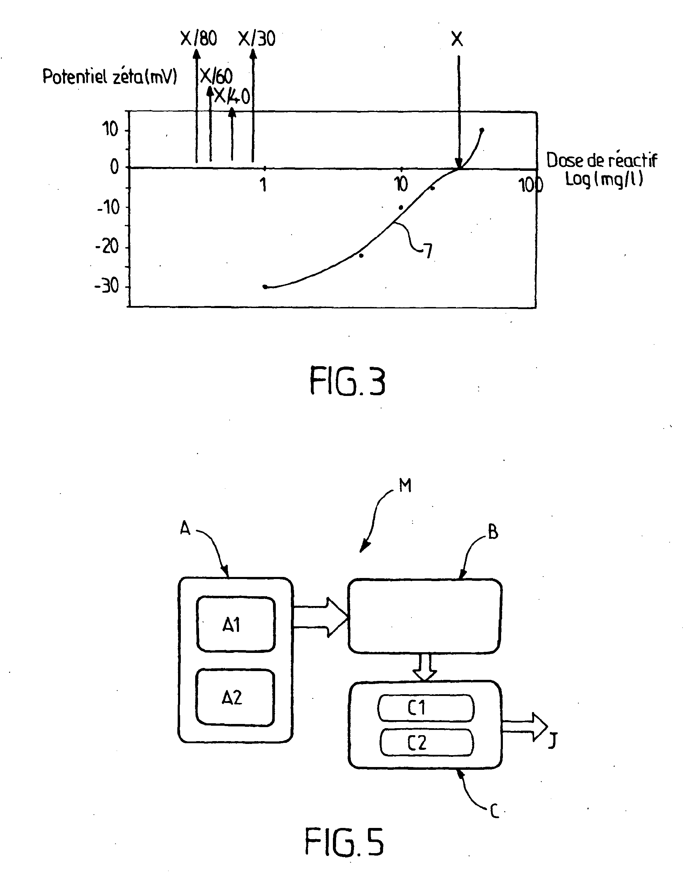

Fig. 3 est un exemple de traitement d'une courbe 7 d'annulation du potentiel Zéta d'un effluent donné en fonction de la dose d'un réactif de coagulation qui est portée en abscisse selon une échelle logarithmique, la dose étant exprimée en mg/L (milligrammes par litre). Le potentiel Zéta est porté en ordonnée et est exprimé en mV (millivolts).

Le point d'intersection de la courbe 7 avec l'axe des abscisses correspond à la dose X de réactif qui annule le potentiel Zéta.

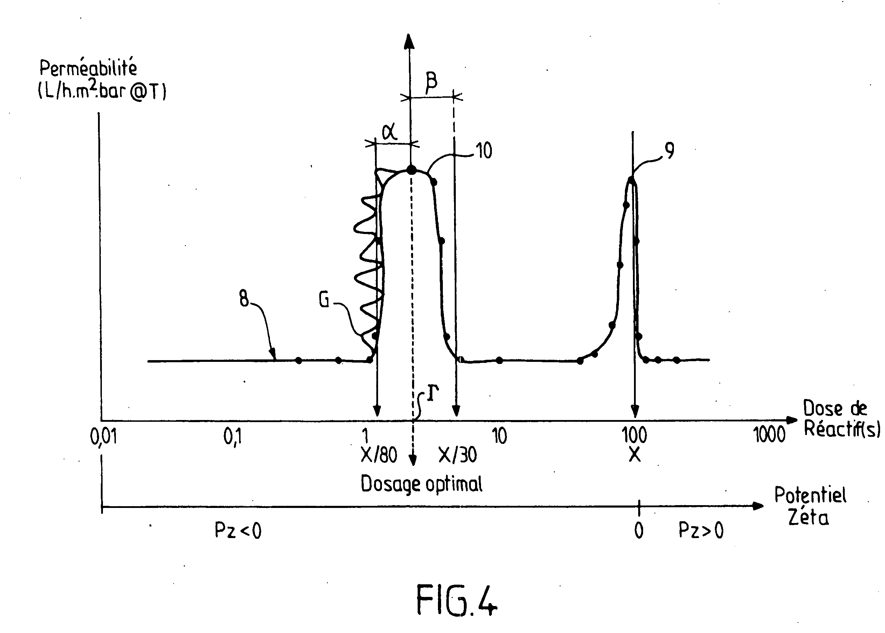

Cette dose X est reportée en abscisse sur Fig. 4 qui représente la variation de perméabilité (L/h.m$^2$.bar@T (litre/heure.m$^2$.bar@T)) d'une membrane. La perméabilité est portée en ordonnée tandis que la dose de réactif est portée en abscisse suivant une échelle logarithmique. Au-dessous de l'axe des doses de réactif figure un axe horizontal correspondant au potentiel Zéta. La courbe 8 illustre la variation de la perméabilité de la membrane en fonction de la dose de réactif de coagulation injectée en amont de cette membrane.

D'une manière classique, pour la dose de réactif égale à X qui annule le potentiel Zéta, la perméabilité de la membrane augmente fortement selon un pic 9 relativement étroit suivant une direction parallèle à l'axe des abscisses.

Comme enseigné par le brevet EP 1 239 943, la perméabilité de la membrane, d'une manière tout à fait surprenante, présente une forte augmentation illustrée par un ressaut 10 de la courbe 8, pour une dose de réactif comprise entre X/80 et X/30. Il apparaît ainsi qu'avec une dose réduite bien choisie de réactif, on peut obtenir une amélioration de la perméabilité de la membrane équivalente ou supérieure à celle obtenue lorsque le potentiel Zéta est annulé.

Sur Fig. 4, on a désigné par Γ le dosage (abscisse) du sommet du ressaut 10 qui correspond au point de fonctionnement optimal technique et économique. En effet ce dosage permet d'assurer la perméabilité maximale avec une consommation minimale de réactif.

La zone située à droite du point Γ et limitée par la valeur X/30 est désignée par β . Cette zone correspond à un surdosage en réactif, par rapport au point Γ de fonctionnement optimal, sans amélioration voire détérioration des performances de la membrane. Le fonctionnement dans la zone p crée en outre un risque d'accumulation de matière et de réactif au voisinage de la membrane, avec un risque de bouchage pour certaines géométries de membranes.

La zone comprise entre le point Γ et la limite inférieure X/80 est désignée par α . Cette zone correspond à un sous-dosage par rapport au point de fonctionnement optimal Γ avec des performances inférieures de la membrane.

Sur Fig. 3, ont été reportées schématiquement les limites X/30 et X/80 des doses de réactif avec une plage intermédiaire préférentielle de X/60 à X/40.

Fig. 4 fait comprendre le but principal de l'invention qui consiste à assurer un point de fonctionnement, pour la filtration sur membrane, voisin de l'optimum Γ. Si le point de fonctionnement correspond à une dose de réactif inférieure à celle du point Γ, l'efficacité de la membrane n'est pas optimale. Si la dose de réactif est supérieure à celle du point Γ, non seulement l'efficacité est inférieure, mais il en résulte un coût économique supérieur en raison du surdosage et un risque de bouchage pour certaines géométries de membranes

Une difficulté du fonctionnement au voisinage du point Γ optimal est due au risque de diverger vers les bornes de la plage.

Le procédé de l'invention est basé sur la logique suivante :

- prise en compte, pour injecter le réactif, de facteurs déclenchant constitués par des caractéristiques définissant la qualité de l'effluent, et/ou des retours de marche c'est-à-dire des caractéristiques sur l'état de la membrane ;
- identification de la plage de fonctionnement X/30-X/80 à partir de la qualité de l'effluent ,
- optimisation de la dose de réactif injectée sur la plage de fonctionnement, de manière à se situer au voisinage du point Γ, avec une dose de réactif qui reste toutefois inférieure à celle du point Γ, et/ou sans risque de diverger vers les extrêmes de la plage X/80-X/30.

Le procédé de l'invention est mis en oeuvre par un ensemble de commande M (Fig. 1, 2 et 5) comprenant une première unité A qui reçoit des variables d'entrée (données analogiques) de deux types, à savoir les variables d'entrée procédé, et les variables d'entrée spécifiques aux membranes.

L'unité A comprend un bloc A1 affecté aux variables d'entrée procédé. Le bloc A1 reçoit des informations fournies par la mesure de grandeurs caractéristiques de la qualité de l'effluent en amont de la membrane à l'aide de capteurs, installés par exemple dans la conduite d'arrivée de l'effluent , et renseignant :

- la température de l'effluent, fournie par exemple par un capteur 11 (Fig. 1 et 2);
- la teneur en matière organique de l'effluent fournie par exemple par un capteur 12 : mesure du COT (carbone organique total) et/ou de l'absorbance UV et/ou de l'indice de colmatage ou fouling index,
- la teneur en matières en suspension et/ou colloïdales, fournie par exemple par un capteur 13, par mesures de la turbidité et/ou du potentiel Zéta et/ou par comptage de particules.
- Bien entendu, le procédé de l'invention ne se limite pas aux techniques d'analyse mentionnées ci-dessus, à titre d'exemple, pour l'acquisition des variables d'entrée procédé.

L'unité A comporte un autre bloc A2 auquel sont envoyées des informations sur des grandeurs d'entrée spécifiques, à la ou aux membranes utilisées, à savoir données de fonctionnement des membranes/retour de marche. Ces variables d'entrée comprennent au moins les grandeurs suivantes :

- le débit instantané de l'effluent traité sur l'étage de membrane $Q_{EB}$ (m³lh), fourni par exemple par un débitmètre 14 installé sur la conduite d'arrivée de l'effluent à traiter ;
- le débit d'injection $Q_R$ (m³/h) du ou des réactif(s) de coagulation, fourni par exemple par un débitmètre 15 installé sur la conduite d'injection du réactif de coagulation ;
- la pression transmembranaire PTM (en bars) par exemple fournie par deux capteurs de pression 16 disposés de part et d'autre de la membrane.

Bien entendu, l'invention n'est pas limitée aux données fournies par ces exemples.

En variante, pour des modules spiralés ou des modules de membranes fibres creuses à peau interne dits IN/OUT, on inclura la mesure de perte de charge du ou des modules par exemple.

Des consignes/seuils de valeurs des variables du bloc A1 sont renseignés par l'exploitant, à l'aide de moyens d'entrée notamment une console, non représentés, pour définir le domaine d'application de la microcoagulation sur membrane par rapport à la nature et la qualité de l'effluent et à la technologie membranaire.

Les variables d'entrée du bloc A1 confrontées à ces consignes/seuils de valeur constituent des facteurs déclenchant la mise en oeuvre de la microcoagulation sur membrane, lors du franchissement des consignes.

Le retour de marche de l'installation, c'est-à-dire l'état d'encrassement de la membrane estimé à partir des variables fournies au bloc A2, est un second facteur déclenchant potentiel de la mise en oeuvre de la microcoagulation sur membrane. Ainsi, la diminution de la perméabilité en deçà d'un seuil limite fixé selon l'invention et/ou une diminution significative sur un pas de temps fixé constitue un autre facteur déclenchant de la mise en oeuvre de la microcoagulation.

Les facteurs déclenchant peuvent intervenir en parallèle, auquel cas le déclenchement de la microcoagulation est commandé par l'un ou l'autre des facteurs déclenchant, ou en série, auquel cas le déclenchement de la microcoagulation est commandé lorsque tous les facteurs déclenchant indiquent le franchissement des consignes respectives.

La gestion ainsi décrite des facteurs déclenchant la microcoagulation sur membrane assure, selon l'invention, la pertinence de la mise en oeuvre du procédé.

L'ensemble de commande M comporte un module B qui permet de situer, à partir des consignes et des variables d'entrée du module A, le point de fonctionnement du procédé de microcoagulation sur membrane dans un espace de fonctionnement considéré comme un espace de mise en oeuvre stable et optimal dudit procédé.

Concrètement, le module B permet de sélectionner le/les réactif(s) le(s) plus adéquat(s) et de déterminer la gamme de variation restreinte de la dose du ou des réactif(s) ou du taux de traitement selon EP 1 239 943, soit un dosage compris entre X/30 et X/80 ou, avantageusement, entre X/40 et X/60, X étant la dose optimale jar test annulant le potentiel Zéta de l'effluent à traiter.

Les différents réactifs possibles, selon les différentes qualités d'effluents, sont stockés dans des récipients séparés (non représentés) qui peuvent être mis en communication avec la conduite d'injection 2 par des valves, non représentées, commandées par le module B.

Selon le mode de fonctionnement et la disponibilité des sources d'information provenant du bloc A1, le traitement dans le module B sera assuré :

- soit par un bloc B1 dans lequel est mémorisé un tableau de paramétrage en fonction de la qualité de l'effluent, qui permet, selon les données fournies par le bloc A1 relativement à l'effluent, de fournir les consignes sur l'emploi préférentiel d'un/des réactif(s) et sur la plage de dosage optimale pour ce ou ces réactifs ; cette plage de dosage correspond de préférence à une plage réduite, située dans la plage α de Fig. 4, pour des dosages légèrement inférieurs à celui du point Γ,
- selon une autre possibilité, les informations provenant du bloc A1 et entrant dans le module B sont traitées dans un bloc B2 comportant un système expert comportant des moyens de calcul et un logiciel. Le bloc B2, à partir des entrées A1, modélise par des règles d'expertise la courbe d'annulation du potentiel Zéta en fonction de la dose du ou des réactif(s) et définit ainsi pour un réactif ou un mélange de réactifs les variables X, puis X/30 et X/80 ou, en variante, X/60 et X/40 tel qu'illustré par Fig. 3.

En fonction de la qualité de l'effluent, renseignée en continu par des capteurs, la détermination de la gamme optimale de dosage X/30-X/80, ou en variante X/40-X/60, est ainsi réactualisée automatiquement.

L'ensemble M comprend en outre un module C qui est un bloc de commande du débit d'injection du ou des réactif(s) de coagulation selon les besoins renseignés par le module B. Le module C commande avantageusement une valve J (Fig. 1 et 2) disposée sur la conduite d'arrivée du réactif 2.

La dose de réactif ou taux de traitement est définie par :

$$TT = C_R{}^*Q_R/Q_{EB}$$

avec :

$C_R$ = concentration du ou des réactifs de coagulation
$Q_R$ = débit d'injection du ou des réactifs de coagulation
$Q_{EB}$ = débit instantané de l'effluent admis sur l'étage de membrane.

Le module C est prévu pour optimiser la dose injectée de réactif et se décompose en deux blocs logiques de commande C1 et C2 activés, selon la disponibilité des informations, pour le pilotage des équipements d'injection du ou des réactifs de coagulation.

Le bloc logique de commande C1 assure un fonctionnement de l'injection de réactif selon un mode d'asservissement. La logique de commande a pour objectif de maintenir un taux de traitement en réactif TT autour d'une valeur de consigne fixée et située dans la plage α (Fig. 4) le plus près possible du point Γ. Plus généralement, la valeur de consigne est comprise entre X/30 et X/80, ou en variante entre X/40 et X/60. Il n'y a pas de contrôle de l'action exercée, c'est ainsi un mode d'asservissement pur. Son intérêt réside dans l'adaptation du débit d'injection du ou des réactifs aux conditions de fonctionnement de l'unité de filtre sur membrane, c'est à dire principalement le débit $Q_{EB}$. Ce mode de gestion par asservissement permet de maintenir un taux de traitement en réactif(s) de coagulation sur une gamme de variation restreinte autour de la valeur de consigne.

L'avantage de cette variante est un fonctionnement stable de la membrane, la dose du ou des réactif(s) étant fixée pour une qualité d'effluent donnée.

Le module C comprend un autre bloc C2 avec logique de commande qui assure un fonctionnement selon un mode de régulation. Cette logique a pour objectif de maintenir un taux de traitement en réactif(s) TT de façon à garantir en continu un taux de traitement optimal voisin du point Γ selon Fig. 4. Les mesures de la perméabilité de la membrane et des pertes de charge du module de filtration (cas des fibres creuses à peau interne et des modules spiralés) sont ici utilisées pour piloter et réguler le débit d'injection du ou des mélanges de réactifs.

Pour ce faire, comme illustré sur Fig. 4 par la courbe montante sinueuse G, la dose de réactif initialement injectée correspond à X/80 ou en variante à X/60 de façon à situer à coup sûr le point de fonctionnement en amont de la partie ascendante du ressaut 10, tout en restant dans la zone α.

Le bloc C2 de régulation commande une augmentation progressive pas à pas du débit d'injection du ou des réactifs aussi longtemps que :

- la variation de la perméabilité est positive, supérieure à une consigne donnée sur un pas de temps fixé,
- et la variation de la mesure des pertes de charge dans la membrane demeure inférieure à une consigne sur un pas de temps fixé.

Dès que la variation de la perméabilité est négative, ce qui correspond au franchissement du point Γ, ou dès que la variation de la mesure des pertes de charge dans la membrane devient supérieure à la consigne, le bloc de régulation C2 cesse d'augmenter le débit d'injection de réactif.

L'intérêt de cette solution réside dans l'analyse en continu de l'encrassement de la membrane et l'adaptation en continu du taux de traitement qui en résulte. Par ailleurs, ce mode de régulation permet de tendre/converger vers le point de fonctionnement Γ optimal techniquement (amélioration maximale des performances de la membrane) et économiquement puisqu'un dosage supérieur à celui du point Γ ne permet pas d'améliorer les performances des membranes (zone β) et augmente le risque de bouchage des membranes.

Enfin, ce mode de gestion permet de s'assurer que le système de régulation ne risque pas de diverger en tendant vers les extrêmes de la zone de fonctionnement X/80 et X/30, ou en variante X/60 et X/40.

Ce mode de gestion permet une mise en oeuvre optimale et parfaitement sécurisée du procédé de microcoagulation sur membrane.

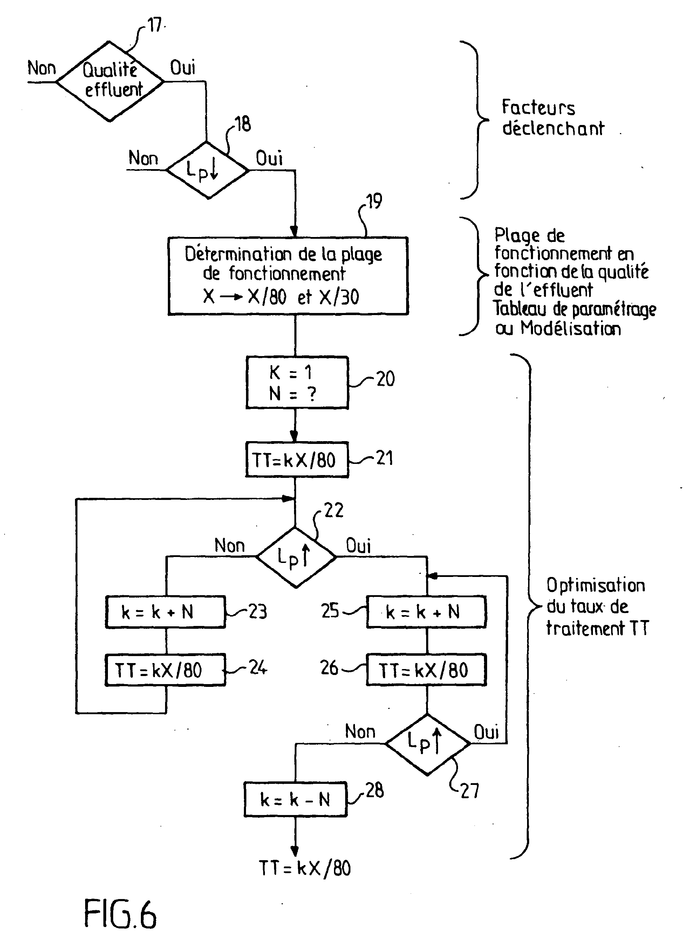

Fig. 6 est un ordinogramme illustrant la logique mise en oeuvre dans le bloc C.

Cet ordinogramme débute, en partie haute du schéma, par une étape conditionnelle 17 qui correspond à une vérification de la qualité de l'effluent. La question posée lors de l'étape 17, correspond à « la qualité de l'effluent est-elle insuffisante ? ». La vérification de la qualité de l'effluent à l'étape 17 est effectuée d'après les critères évoqués précédemment.

Si la réponse est « NON », il n'y a pas besoin de microcoagulation. Si la réponse est « OUI », il est possible comme illustré sur Fig.6, de subordonner le déclenchement de la microcoagulation à une nouvelle étape conditionnelle 18 pour vérifier si la perméabilité de la membrane est en train de diminuer.

A la question de l'étape 18, si la réponse est « NON » c'est-à-dire si la perméabilité ne diminue pas, la microcoagulation n'est pas déclenchée. Par contre, si la réponse est « OUI » signifiant que la perméabilité de la membrane diminue, l'ordinogramme passe à l'étape suivante 19 qui détermine la plage de dosage du réactif comprise entre X / 80 et X / 30, X étant la dose qui annule le potentiel Zéta.

Après l'étape 19, on passe à l'étape 20 qui fixe égale à 1 la valeur initiale d'un coefficient k appliqué à X / 80 et qui détermine le pas de dosage N, c'est-à-dire l'augmentation de la dose de réactif à chaque boucle.

L'étape suivante 21 correspond à un taux de traitement TT avec injection d'une dose de réactif kX / 80, où k est égal à 1 pour la première injection.

L'étape suivante 22 vérifie si la perméabilité de la membrane augmente suite à l'injection effectuée en 21. Si la réponse est « NON », on augmente le coefficient k du pas N et on injecte une dose égale à kX / 80. L'augmentation du coefficient k s'effectue à l'étape 23, et l'injection de la dose augmentée s'effectue à l'étape 24.

Après l'injection de l'étape 24, on revient à l'interrogation de l'étape 22. Si la réponse à l'interrogation de l'étape 22 est « OUI », indiquant que la perméabilité augmente, à l'étape suivante 25 on augmente le coefficient k du pas N et à l'étape 26 on procède à l'injection de la dose augmentée kX / 80.

A la suite de l'injection de l'étape 26, on vérifie lors d'une étape 27 si la perméabilité de la membrane augmente. Si la réponse est « OUI » on revient à l'entrée de l'étape 25 pour augmenter d'un pas N le coefficient k de façon à monter suivant la partie ascendante G du créneau 10 de Fig.4.

Lorsque la réponse à l'interrogation 27 est « NON » on passe à l'étape 28 qui donne à la valeur k une valeur égale à la dernière valeur de k diminuée de N, soit (k-N), qui détermine la dose optimale kX / 80 qui se situe au voisinage du maximum de la courbe 10 de Fig. 4.

Les étapes 17 et 18 correspondent aux facteurs déclenchant la microcoagulation. L'étape 19 détermine la plage de fonctionnement en fonction de la qualité de l'effluent, par un tableau de paramétrage ou une modélisation.

Les étapes suivantes 21 à 28 assurent l'optimisation du taux de traitement TT.

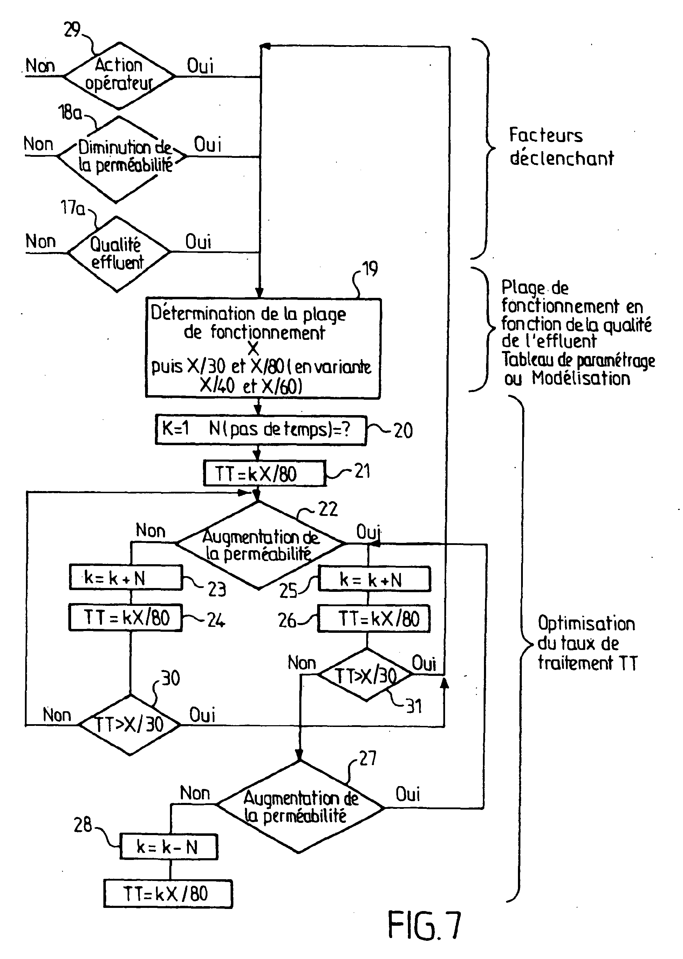

Fig. 7 illustre une variante de l'ordinogramme de Fig.6. Un certain nombre d'étapes sont identiques et désignées par les mêmes références numériques sans que leur description soit reprise.

En début d'ordinogramme, trois étapes conditionnelles 17a, 18a et 29 interviennent en parallèle. Il suffit que la réponse soit « OUI » à l'une de ces interrogations pour que l'étape suivante 19 soit enclenchée.

L'étape 17a est une interrogation sur la qualité de l'effluent. « La qualité est-elle insuffisante ? ». Si la réponse est « OUI » l'étape 19 est déclenchée, si la réponse est « NON » la microcoagulation n'a pas besoin d'être déclenchée.

L'étape 18a correspond à une interrogation sur la variation de la perméabilité. Si la perméabilité de la membrane diminue (réponse « OUI ») l'étape 19 est déclenchée.

Enfin, l'étape 29 correspond à une action de l'utilisateur, ce dernier pouvant déclencher la microcoagulation.

Comme différence par rapport à Fig.6 on peut noter qu'à la sortie de l'étape 24, une étape conditionnelle 30 est prévue pour vérifier si le taux de traitement TT est supérieur à X/30. Si la réponse est « NON », on peut encore augmenter d'un pas N la dose injectée et on retourne à l'entrée de l'étape 22. Si la réponse est « OUI » on dépasse la valeur maximale de la plage de dosage et on retourne à l'entrée de l'étape 19 pour vérifier et déterminer à nouveau la plage de fonctionnement.

La sortie de l'étape 26 est reliée à l'entrée d'une étape conditionnelle 31 qui vérifie également si TT est supérieur à X/30. Si la réponse est « OUI » il y a retour à l'entrée de l'étape 19 pour déterminer à nouveau la plage de fonctionnement. Si la réponse à l'étape 31 est « NON » on passe à l'étape 27 qui vérifie si la perméabilité de la membrane augmente. Si la réponse est « OUI » on retourne à l'entrée de l'étape 25 pour augmenter d'un pas N la dose de réactif. Si la réponse est « NON » on passe à l'étape 28 qui fixe la valeur de k à la dernière valeur k diminuée d'un pas N.

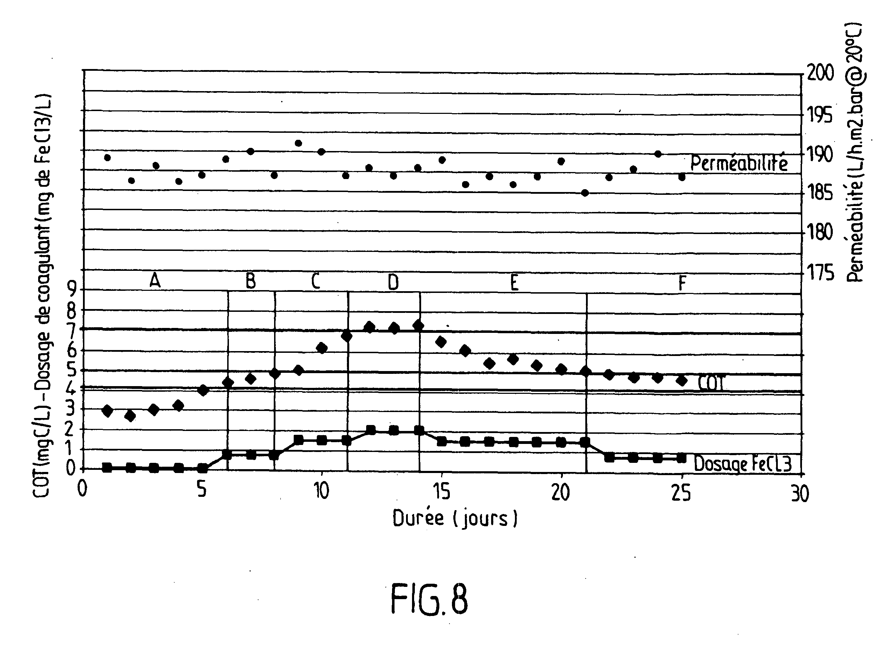

Fig.8 illustre, pour un exemple de mise en oeuvre du procédé de gestion de l'invention, l'évolution de la qualité de l'effluent, du dosage de réactif et de la perméabilité de la membrane au cours du temps.

Cet exemple concerne une expérience réalisée sur un module de membrane d'ultrafiltration de la société française Aquasource (fibres creuses de type in/out, ou à peau interne, en carter) dont la surface de filtration est de 1 m$^2$.

Une unité pilote est équipée sur la conduite d'alimentation

- d'un capteur de température,
- d'un appareil de mesure en ligne du Carbone Organique Total (COT),
- d'un débitmètre d'eau d'alimentation,
- de deux capteurs de pression disposés de part et d'autre de la membrane pour mesurer la pression transmembranaire.

L'unité est alimentée par l'eau de Seine dont la qualité est bien connue des expérimentateurs. Dans ce contexte, un tableau de paramétrage a été mémorisé dans le bloc B1 pour fournir les consignes sur l'emploi préférentiel d'un réactif et la plage de dosage optimale, c'est à dire proche du dosage optimal $\Gamma$ tel que décrit dans la présente invention.

Ce tableau de paramétrage indique, dans ce cas précis, le choix d'un seul réactif (le chlorure ferrique) et les taux de traitement à mettre en oeuvre en fonction de la teneur en Carbone Organique Total (COT) contenu dans l'effluent :

Tableau de paramètrage

| Qualité efftuent / COT | Réactif | Dosage(mg / L de FeCl$_3$ pur) |
|---|---|---|
| ≤ 4 mgC/l | FeCl3 | 0 |
| > 4 mgC/L et ≤ 5 mg C/L | | 0,75 |
| > 5 mg C/L et ≤ 7 mg C/L | | 1,50 |
| > 7 mg C/L | | 2,00 |

Il est à souligner que les dosages du réactif renseignés dans ce tableau de paramétrage sont toujours compris entre X/30 et X/80 avec X, la dose du dit réactif annulant le potentiel Zéta.

L'unité est ainsi exploitée sur une période de 25 jours avec une logique de commande de l'injection de réactif selon un mode d'asservissement tel que décrit dans la présente invention.

Ainsi, en fonction du débit d'alimentation, le débit d'injection de réactif est asservi au débit d'alimentation pour obtenir le dosage de réactif renseigné dans le tableau ci-dessus.

Les résultats obtenus sont illustrés par Fig.8 sur laquelle figurent :

- en abscisse le temps, exprimé en jours,
- en ordonnées à gauche, les teneurs en COT de l'effluent à filtrer en mg C par litre et le dosage de réactif coagulant en mg par litre de FeCl$_3$ pur,
- en ordonnée à droite, la perméabilité de la membrane en L/h.m$^2$.bar @20°C.

Au cours de la période d'essai, on distingue ainsi 6 périodes distinctes (A, B, C, D, E, F) au cours desquelles le dosage de chlorure ferrique est ajusté entre 0 et 2 mg/l de produit pur en fonction de l'évolution de la teneur en COT de l'effluent selon le tableau de paramétrage renseigné précédemment.

Au cours de la période A :

- l'injection de réactif n'est pas activée (COT ≤ 4 mgC/l),
- la membrane est exploitée en filtration frontale avec un rétrolavage à l'eau de 30s toutes les 90 min sans injection de réactif,
- les eaux de lavage sont évacuées vers un égout sans traitement.

Au cours des périodes B, C. E, F, G :

- l'injection de réactif est activée et le dosage asservi au débit d'alimentation pour satisfaire un dosage conforme au tableau de paramètrage en fonction de la qualité de l'effluent (concentration en COT),
- la membrane est exploitée en filtration frontale avec cette fois un rétrolavage air/eau pulsée de 40s toutes les 60 min. Ce rétrolavage air/eau est en effet plus efficace pour éliminer le réactif de coagulation qui pourrait s'accumuler au voisinage de la membrane. Par ailleurs, tous les 12 rétrolavages, le perméat injecté en contreperméation contient de l'acide citrique à 1 g/L en vue de solubiliser les hydroxydes de fer et de favoriser l'élimination du coagulant,
- enfin, les eaux de lavage qui contiennent des hydroxydes de fer sont orientées automatiquement vers un bac de décantation dont le surnageant est évacué vers l'égout et les boues extraites de sorte que la qualités des rejets vers l'égout n'est pas affecté par la mise en oeuvre de la microcoagulation.

Au cours de la période D : les conditions de fonctionnement sont similaires aux périodes B, C, E, F et G. En revanche, du fait de l'augmentation du dosage de réactif au delà du seuil de 1,5 mg/L de FeCl3 pur, la fréquence de rétrolavage diphasique est augmentée, soit un rétrolavage toutes les 45 min et la fréquence d'injection d'acide est augmentée à 1 fois tous les 6 rétrolavages.

Tout au long de la période d'essai, les évolutions de la conduite du traitement sont gérées automatiquement sans intervention humaine. Entièrement automatisé, ce mode de gestion selon la présente invention permet la mise en oeuvre de la microcogulation dans des conditions optimales qui s'adaptent en fonction de l'évolution de la qualité de l'effluent.

Ainsi, tout au long de l'expérience de 25 j, le fonctionnement de la membrane est demeuré stable (perméabilité comprise entre 185 et 195 l/h.m$^2$.bar@20°C) illustrant la maîtrise de la mise en oeuvre de la microcoagulation que procure le mode de gestion avancée décrit par la présente invention.

**Revendications**

1. Procédé de gestion avancée d'une unité de filtration sur membrane, appliqué au traitement d'un effluent, mettant en oeuvre une microcoagulation sur membrane qui consiste à injecter en amont de la membrane une dose de réactif (s) de coagulation 30 à 80 fois inférieure à la dose (X) annulant le potentiel Zéta de l'effluent, **caractérisé en ce que** :

   - on mesure, en tant que variables d'entrée, des grandeurs définissant la qualité de l'effluent à traiter et des grandeurs définissant l'état d'encrassement de la membrane ;
   - on situe le point de fonctionnement du procédé de microcoagulation à partir des résultats des mesures précédentes et on détermine des seuils pour les variables d'entrée dont le franchissement doit déclencher la microcoagulation,
   - et, selon les résultats des mesures et de la comparaison des variables d'entrée avec les seuils respectifs, on pilote l'injection du/des réactif(s) de coagulation.

2. Procédé selon la revendication 1, **caractérisé en ce que** les grandeurs mesurées pour définir la qualité de l'effluent à traiter comprennent au moins une des grandeurs suivantes :

   - la température,
   - la teneur en matière organique, en particulier mesures du COT et /ou de l'absorbance UV et/ou de l'indice de colmatage,
   - la teneur en matières en suspension et/ou colloïdales, en particulier mesures de la turbidité et/ou du potentiel Zéta et/ou le comptage de particules.

3. Procédé selon la revendication 1 ou 2, **caractérisé en ce que** les grandeurs mesurées pour définir l'état d'encrassement de la membrane comprennent au moins les grandeurs suivantes:

   - le débit instantané $Q_{EB}$ de l'effluent traité sur l'étage de membrane;
   - le débit d'injection $Q_R$ du ou des réactifs de coagulation
   - la pression transmembranaire PTM.

4. Procédé selon l'une des revendications précédentes, **caractérisé en ce que** le point de fonctionnement est situé par détermination du/des réactif(s) adapté(s) à l'effluent mesuré et par détermination de la plage de variation de la dose du/des réactif(s).

5. Procédé selon l'une quelconque des revendications précédentes, **caractérisé en ce que** le point de fonctionnement est situé à partir d'un tableau de paramétrage faisant correspondre à des types d'effluents, définis par des plages de valeurs de grandeurs caractéristiques, des réactifs de coagulation adaptés et des plages de dosage appropriées.

6. Procédé selon l'une quelconque des revendications 1 à 4, **caractérisé en ce que** le point de fonctionnement est déterminé par un système expert qui sélectionne le/les réactifs appropriés à l'effluent mesuré, et en détermine, par modélisation, la gamme de variation de dosage pour tendre vers le point de fonctionnement optimal.

7. Procédé selon l'une quelconque des revendications précédentes, **caractérisé en ce que** le dosage du réactif est réglé par asservissement sur le débit d'effluent traité.

8. Procédé selon l'une quelconque des revendications 1 à 6, **caractérisé en ce que** le dosage du réactif est assuré par régulation avec injection d'une dose minimale et augmentation pas à pas de la dose aussi longtemps que l'augmentation de la dose produit une augmentation de la perméabilité de la membrane, et arrêt de l'augmentation de la dose injectée de réactif lorsqu'une diminution de la perméabilité de la membrane fait suite à une augmentation de la dose.

9. Procédé selon la revendication 8, **caractérisé en ce que** l'on régule l'injection du/des réactif(s) de coagulation en fonction des retours de fonctionnement de la membrane, significatifs de son encrassement, pour tendre vers le point de fonctionnement optimal.

10. Procédé selon l'une quelconque des revendications précédentes, **caractérisé en ce que**, lorsqu'un doute est émis sur la validité ou la représentativité d'un des signaux d'entrée ou lorsqu'une anomalie dans les retours de marche intervient, le pilotage de l'unité de membrane s'effectue selon un mode de gestion de repli de la station par asservissement.

**11.** Installation pour la mise en oeuvre d'un procédé selon l'une quelconque des revendications précédentes, comportant au moins une unité de filtration sur membrane, appliqué au traitement d'un effluent, mettant en oeuvre une microcoagulation sur membrane comprenant des moyens (2) pour injecter en amont de la membrane une dose de réactif (s) de coagulation 30 à 80 fois inférieure à la dose (X) annulant le potentiel Zéta de l'effluent, **caractérisée en ce qu'**elle comporte un ensemble de commande (M) comprenant:

- des moyens de mesure (11,12,13 ,16), en tant que variables d'entrée, des grandeurs définissant la qualité de l'effluent à traiter et des grandeurs définissant l'état d'encrassement de la membrane ;
- une unité (A) pour situer le point de fonctionnement du procédé de microcoagulation à partir des résultats des mesures précédentes et pour déterminer des seuils pour les variables d'entrée dont le franchissement doit déclencher la microcoagulation,
- un module (B) d'analyse des résultats de mesures et de comparaison des variables d'entrée avec les seuils respectifs,
- et un module (C) pour piloter l'injection du/des réactif(s) de coagulation.

**12.** Installation selon la revendication 11, **caractérisée en ce que** l'unité (A) comprend un bloc (A1) affecté aux variables d'entrée procédé et un bloc (A2) auquel sont envoyées des informations sur des grandeurs d'entrée spécifiques à la ou aux membranes utilisées, à savoir données de fonctionnement des membranes/retour de marche.

**13.** Installation selon la revendication 12, **caractérisée en ce que** le bloc (A1) affecté aux variables d'entrée reçoit des informations fournies par la mesure de grandeurs caractéristiques de la qualité de l'effluent en amont de la membrane comprenant au moins l'une des grandeurs suivantes :

- la température de l'effluent, fournie par un capteur (11) ;
- la teneur en matière organique de l'effluent fournie par un capteur (12) par mesure du COT (carbone organique total) et/ou de l'absorbance UV et/ou de l'indice de colmatage,
- la teneur en matières en suspension et/ou colloïdales, fournie par un capteur (13), par mesures de la turbidité et/ou du potentiel Zéta et/ou par comptage de particules,

les capteurs étant disposés dans la conduite d'arrivée de l'effluent.

**14.** Installation selon la revendication 12 ou 13, **caractérisée en ce que** le bloc (A2), auquel sont envoyées des informations sur des grandeurs d'entrée spécifiques à la ou aux membranes utilisées, reçoit des informations fournies par la mesure de grandeurs caractéristiques de l'état de la membrane, comprenant au moins les grandeurs suivantes:

- le débit instantané ($Q_{EB}$) de l'effluent traité sur l'étage de membrane fourni par un débitmètre (14) installé sur la conduite d'arrivée de l'effluent traité ;
- le débit d'injection ($Q_R$) du ou des réactif(s) de coagulation, fourni par un débitmètre (15) installé sur la conduite d'injection du réactif de coagulation ;
- la pression transmembranaire PTM (en bars) fournie par un deux capteur(s) de pression (16) disposés de part et d'autre de la membrane.

**15.** Installation selon l'une quelconque des revendications 11 à 14, **caractérisée en ce qu'**elle comporte des moyens d'entrée pour permettre à l'utilisateur d'entrer des consignes/seuils de valeurs des variables, pour définir le domaine d'application de la microcoagulation sur membrane par rapport à la nature et la qualité de l'effluent.

**16.** Installation selon l'une quelconque des revendications 11 à 15, **caractérisée en ce que** le module (B) pour situer, à partir des consignes et des variables d'entrée, le point de fonctionnement du procédé de microcoagulation sur membrane ;, est prévu pour assurer le traitement des informations:

- soit par un bloc (B1) dans lequel est mémorisé un tableau de paramétrage en fonction de la qualité de l'effluent, qui permet, selon les données fournies relativement à l'effluent, de fournir les consignes sur l'emploi préférentiel d'un/des réactif(s) et sur la plage de dosage optimale pour ce ou ces réactifs ;
- soit par un bloc (B2) comportant un système expert comportant des moyens de calcul et un logiciel pour modéliser par des règles d'expertise la courbe d'annulation du potentiel Zéta en fonction de la dose du ou des réactif(s) et définir ainsi pour un réactif ou un mélange de réactifs les variables X, puis X/30 et X/80.

**17.** Installation selon l'une quelconque des revendications 11 à 16, **caractérisée en ce que** l'ensemble de commande (M) comprend en outre un module (C) de commande du débit d'injection du ou des réactif(s) de coagulation selon les besoin renseignés.

**18.** Installation selon la revendication 17, **caractérisée en ce que** le module (C) de commande se décompose en deux blocs logiques de commande (C1, C2) activés, selon la disponibilité des informations, pour le pilotage des équipements d'injection du ou des réactifs de coagulation,

> - un bloc logique de commande (C1) étant prévu pour assurer un fonctionnement de l'injection de réactif selon un mode d'asservissement,
> - l'autre bloc logique de commande (C2) étant prévu pour assurer un fonctionnement de l'injection de réactif selon un mode de régulation.

**Claims**

**1.** A method for the advanced control of a membrane filtration unit, applied to the treatment of an effluent, employing microcoagulation on a membrane, which consists in injecting, upstream of the membrane, a dose of coagulant(s) 30 to 80 times smaller than the dose (X) giving the effluent a zero zeta potential, **characterized in that**:

> - as input variables, quantities defining the quality of the effluent to be treated and quantities defining the membrane fouling state are measured;
> - the operating point of the microcoagulation process is located on the basis of the results of the above measurements and thresholds for the input variables, the microcoagulation having to be triggered when these are violated, are determined; and
> - depending on the results of the measurements and the comparison of the input variables with the respective thresholds, the coagulant or coagulants are injected.

**2.** The method as claimed in claim 1, **characterized in that** the measured quantities for defining the quality of the effluent to be treated comprise at least one of the following quantities:

> - the temperature;
> - the content of organic matter, in particular TOC and/or UV absorbance and/or fouling index measurements; and
> - the content of suspended and/or colloidal matter, in particular turbidity and/or zeta potential and/or particle counting measurements.

**3.** The method as claimed in claim 1 or 2, **characterized in that** the measured quantities for defining the membrane fouling state comprise at least the following quantities:

> - the instantaneous flow rate $Q_{EB}$ of the effluent treated on the membrane stage;
> - the injection flow rate $Q_R$ of the coagulant or coagulants; and
> - the transmembrane pressure $P_{TM}$.

**4.** The method as claimed in one of the preceding claims, **characterized in that** the operating point is located by determining the coagulant(s) suitable for the measured effluent and by determining the range of variation of the dose of the coagulant(s).

**5.** The method as claimed in any one of the preceding claims, **characterized in that** the operating point is located on the basis of a parameterization table for making the suitable coagulants and appropriate dosing ranges correspond to types of effluents defined by ranges of characteristic quantity values.

**6.** The method as claimed in any one of claims 1 to 4, **characterized in that** the operating point is determined by an expert system that selects the coagulant(s) appropriate to the measured effluent and from this determines, by modeling, the range of dosage variation for tending toward the optimum operating point.

**7.** The method as claimed in any one of the preceding claims, **characterized in that** the coagulant dosage is regulated by being slaved to the treated effluent flow rate.

8. The method as claimed in any one of claims 1 to 6, **characterized in that** the coagulant is dosed by regulation with injection of a minimum dose and stepwise increase in the dose for as long a time as the increase in the dose produces an increase in the membrane permeability, the increase in injected coagulant dose being stopped when a reduction in membrane permeability results from an increase in the dose.

9. The method as claimed in claim 8, **characterized in that** the injection of the coagulant(s) is regulated according to the operating backflows of the membrane, signifying the fouling thereof, in order to tend toward the optimum operating point.

10. The method as claimed in any one of the preceding claims, **characterized in that**, when there is doubt about the validity or the representativeness of one of the input signals or when an anomaly in the backflows occurs, the membrane unit is controlled according to a station feedback control mode.

11. An installation for implementing a method as claimed in any one of the preceding claims, comprising at least one membrane filtration unit, applied to the treatment of an effluent, employing microcoagulation on a membrane, comprising means (2) for injecting, upstream of the membrane, a dose of coagulant(s) 30 to 80 times lower than the dose (X) giving the effluent a zero zeta potential, **characterized in that** it includes a control assembly (M) comprising:

   - means (11, 12, 13; 16) for measuring, as input variables, quantities defining the quality of the effluent to be treated and quantities defining the membrane fouling state;
   - a unit (A) for locating the operating point of the microcoagulation process on the basis of the results of the above measurements and for determining thresholds for the input variables, the microcoagulation having to be triggered when said thresholds are violated;
   - a module (B) for analyzing the measurement results and for comparing the input variables with the respective thresholds; and
   - a module (C) for injecting the coagulant(s).

12. The installation as claimed in claim 11, **characterized in that** the unit (A) comprises a block (A1) assigned to the process input variables and a block (A2) to which information about input quantities specific to the membrane or membranes used, namely membrane/backflow operating data, is sent.

13. The installation as claimed in claim 12, **characterized in that** the block (A1) assigned to the input variables receives information delivered by the measurement of quantities characteristic of the quality of the effluent upstream of the membrane, comprising at least one of the following quantities:

   - the temperature of the effluent, delivered by a sensor (11);
   - the content of organic matter of the effluent, delivered by a sensor (12), by TOC (total organic carbon) and/or UV absorbance and/or fouling index measurements;
   - the content of suspended and/or colloidal matter, delivered by a sensor (13), by turbidity and/or zeta potential and/or particle counting measurements, the sensors being placed in the effluent intake line.

14. The installation as claimed in claim 12 or 13, **characterized in that** the block (A2), to which information about input quantities specific to the membrane(s) used is sent, receives information delivered by the measurement of quantities characteristic of the state of the membrane, comprising at least the following quantities:

   - the instantaneous flow rate ($Q_{EB}$) of the effluent treated on the membrane stage, delivered by a flowmeter (14) installed on the treated effluent intake line;
   - the injection flow rate ($Q_R$) of the coagulant(s), delivered by a flowmeter (15) installed on the coagulant injection line; and
   - the transmembrane pressure $P_{TM}$ (in bar) delivered by two pressure sensors (16) placed on either side of the membrane.

15. The installation as claimed in any one of claims 11 to 14, **characterized in that** it includes input means for allowing the user to input setpoints/thresholds of the variables in order to define the field of application of the membrane microcoagulation relative to the nature and the quality of the effluent.

16. The installation as claimed in any one of claims 11 to 15, **characterized in that** the module (B) for locating, on the basis of the setpoints and the input variables, the operating point of the membrane microcoagulation process is provided for processing the information:

- either by a block (B1) in which a parameterization table, for parameterizing according to the quality of the effluent, is stored, which block makes it possible, according to the effluent data delivered, to deliver the setpoints as regards the preferential use of a/the coagulant(s) and with regard to the optimum dosage range for this or these coagulants;
- or by a block (B2) comprising an expert system having computing means and software for modeling, by expertise rules, the curve for making the zeta potential zero as a function of the dose of the coagulant(s) and for thus defining, for a coagulant or a mixture of coagulants, the variables X, then X/30 and X/80.

17. The installation as claimed in any one of claims 11 to 16, **characterized in that** the control assembly (M) furthermore includes a module (C) for controlling the rate of injection of the coagulant or coagulants according to the informed requirements.

18. The installation as claimed in claim 17, **characterized in that** the control module (C) is made up of two control logic blocks (C1, C2) that are activated, depending on the information availability, in order to control the equipment for injecting the coagulant(s), namely:

- one control logic block (C1) being designed to ensure operation of the coagulant injection in feedback mode; and
- the other control logic block (C2) being designed to ensure operation of the coagulant injection in regulating mode.

**Patentansprüche**

1. Verfahren zur verbesserten Steuerung einer Membranfilterungseinheit, angewandt auf die Behandlung eines Abwassers, das eine Membran-Mikrokoagulation einsetzt, die darin besteht, vor der Membran eine Dosis eines (von) Koagulationsreagenz(ien) einzuleiten, die 30 bis 80 mal geringer als die das Zeta-Potential des Abwassers aufhebende Dosis (X) ist, **dadurch gekennzeichnet, dass**:

- als Eingangsvariablen Größen gemessen werden, welche die Qualität des zu behandelnden Abwassers definieren, sowie Größen, welche den Verschmutzungszustand der Membran definieren,
- der Arbeitspunkt des Mikrokoagulationsverfahrens anhand der Ergebnisse der vorhergehenden Messungen gesetzt wird und Schwellwerte für die Eingangsvariablen festgelegt werden, deren Überschreiten die Mikrokoagulation auslösen soll, und
- entsprechend den Ergebnissen der Messungen und des Vergleichs der Eingangsvariablen mit den jeweiligen Schwellwerten das Einleiten des/der Koagulationsreagenz(ien) gesteuert wird.

2. Verfahren nach Anspruch 1, **dadurch gekennzeichnet, dass** die zur Definition der Qualität des zu behandelnden Abwassers gemessenen Größen wenigstens eine der folgenden Größen umfassen:

- die Temperatur
- den Gehalt an organischem Material, insbesondere die Messwerte des TOC und/oder der UV-Absorbanz und/oder des Verstopfungsgrades,
- den Gehalt an Schwebstoffen und/oder kolloiden Stoffen, insbesondere die Messwerte der Trübung und/oder des Zeta-Potentials und/oder die Partikelzählung.

3. Verfahren nach Anspruch 1 oder 2, **dadurch gekennzeichnet, dass** die zur Definition des Verschmutzungszustandes der Membran gemessenen Größen wenigstens die folgenden Größen umfassen:

- den momentanen Durchsatz ($Q_{EB}$) des auf der Membranstufe behandelten Abwassers,
- den Einleitungsdurchsatz ($Q_R$) des oder der Koagulationsreagenz(ien),
- den Transmembrandruck TMP.

4. Verfahren nach einem der vorstehenden Ansprüche, **dadurch gekennzeichnet, dass** der Arbeitspunkt durch Bestimmung des/der an das gemessene Abwasser angepassten Koagulationsreagenz(ien) sowie durch Bestimmung des Variationsbereiches der Dosis des/der Reagenz(ien) gesetzt wird.

5. Verfahren nach einem der vorstehenden Ansprüche, **dadurch gekennzeichnet, dass** der Arbeitspunkt anhand einer Parametriertabelle gesetzt wird, die Abwasserarten, welche durch Kenngrößenwertebereiche definiert werden, geeignete Koagulationsreagenzien und geeignete Dosierbereiche zuordnet.

6. Verfahren nach einem der Ansprüche 1 bis 4, **dadurch gekennzeichnet, dass** der Arbeitspunkt durch ein Expertensystem bestimmt wird, welches das/die für das gemessene Abwasser geeignete(n) Reagenz(ien) auswählt und hieraus durch Modellierung den Variationsbereich der Dosierung festlegt, um in Richtung des optimalen Arbeitspunktes zu tendieren.

7. Verfahren nach einem der vorstehenden Ansprüche, **dadurch gekennzeichnet, dass** die Dosierung des Reagenz durch Regelung auf den Durchsatz an behandeltem Abwasser eingestellt wird.

8. Verfahren nach einem der Ansprüche 1 bis 6, **dadurch gekennzeichnet, dass** die Dosierung des Reagenz reguliert sichergestellt wird, mit einem Einleiten einer minimalen Dosis und einer schrittweisen Erhöhung der Dosis solange die Erhöhung der Dosis zu einer Erhöhung der Permeabilität der Membran führt, und einem Stoppen der Erhöhung der eingeleiteten Reagenzdosis, wenn es im Anschluss an eine Erhöhung der Dosis zu einer Verringerung der Permeabilität der Membran kommt.

9. Verfahren nach Anspruch 8, **dadurch gekennzeichnet, dass** die Einleitung des/der Reagenz(ien) in Abhängigkeit von den Betriebsrückstellungen der Membran, die für ihre Verschmutzung bezeichnend sind, reguliert wird, um in Richtung des optimalen Arbeitspunktes zu tendieren.

10. Verfahren nach einem der vorstehenden Ansprüche, **dadurch gekennzeichnet, dass** wenn ein Zweifel bezüglich der Gültigkeit oder der Repräsentativität eines der Eingangssignale auftritt oder wenn es bei den Betriebsrückstellungen zu einer Anomalie kommt, die Steuerung der Membraneinheit entsprechend einem Modus der Notlaufführung der Station mittels Regelung erfolgt.

11. Anlage für die Durchführung eines Verfahrens nach einem der vorstehenden Ansprüche, mit wenigstens einer Membranfilterungseinheit, angewandt auf die Behandlung eines Abwassers, das eine Membran-Mikrokoagulation einsetzt, umfassend Mittel (2), um vor der Membran eine Dosis eines (von) Koagulationsreagenz(ien) einzuleiten, die 30 bis 80 mal geringer als die das Zeta-Potential des Abwassers aufhebende Dosis (X) ist, **dadurch gekennzeichnet, dass** sie eine Steuereinheit (M) aufweist, die umfasst:

   - Mittel zum Messen (11, 12, 13; 16) - als Eingangsvariablen - der Größen, welche die Qualität des zu behandelnden Abwassers definieren, sowie der Größen, welche den Verschmutzungszustand der Membran definieren,
   - eine Einheit (A), um den Arbeitspunkt des Mikrokoagulationsverfahrens anhand der Ergebnisse der vorhergehenden Messungen zu setzen und um Schwellwerte für die Eingangsvariablen festzulegen, deren Überschreiten die Mikrokoagulation auslösen soll,
   - ein Modul (B) zur Analyse der Messergebnisse und zum Vergleichen der Eingangsvariablen mit den jeweiligen Schwellwerten, und
   - ein Modul (C) zum Steuern des Einleitens des/der Koagulationsreagenz(ien).

12. Anlage nach Anspruch 11, **dadurch gekennzeichnet, dass** die Einheit (A) einen den Verfahrenseingangsvariablen zugewiesenen Block (A1) und einen Block (A2) umfasst, an den Informationen über für die verwendete(n) Membran oder Membranen spezifische Eingangsgrößen, nämlich Daten über Betrieb der Membranen/Betriebsrückstellung gesandt werden.

13. Anlage nach Anspruch 12, **dadurch gekennzeichnet, dass** der den Eingangsvariablen zugewiesene Block (A1) Informationen empfängt, die durch die Messung von Kenngrößen der Qualität des Abwassers vor der Membran geliefert werden, welche wenigstens eine der folgenden Größen umfassen:

   - die Temperatur des Abwassers, welche durch einen Sensor (11) geliefert wird;
   - den Gehalt des Abwassers an organischem Material, der durch einen Sensor (12) durch Messung des TOC (gesamter organischer Kohlenstoff) und/oder der UV-Absorbanz und/oder des Verstopfungsgrades geliefert wird,
   - den Gehalt an Schwebstoffen und/oder kolloiden Stoffen, der durch einen Sensor (13) durch Messungen der Trübung und/oder des Zeta-Potentials und/oder durch Partikelzählung geliefert wird,

wobei die Sensoren in der Leitung zum Zuführen des Abwassers angeordnet sind.

14. Anlage nach Anspruch 12 oder 13, **dadurch gekennzeichnet, dass** der Block (A2), an den Informationen über für die verwendete(n) Membran oder Membranen spezifische Eingangsgrößen gesandt werden, Informationen empfängt, die durch die Messung von Kenngrößen des Zustandes der Membran bereit gestellt werden, welche wenigstens die folgenden Größen umfassen:

- den momentanen Durchsatz ($Q_{EB}$) des auf der Membranstufe behandelten Abwassers, der durch ein Durchflussmessgerät (14) geliefert wird, das an der Leitung zum Zuführen des behandelten Abwassers angebracht ist;
- den Einleitungsdurchsatz ($Q_R$) des oder der Koagulationsreagenz(ien), der durch ein Durchflussmessgerät (15) geliefert wird, das an der Leitung zum Einleiten des Koagulationsreagenz angebracht ist;
- den Transmembrandruck TMP (in bar), der durch einen zwei auf beiden Seiten der Membran angeordnete(n) Druckgeber (16) geliefert wird.

15. Anlage nach einem der Ansprüche 11 bis 14, **dadurch gekennzeichnet, dass** sie Eingabemittel umfasst, um dem Benutzer zu ermöglichen, Sollwerte/Wertschwellen der Variablen einzugeben, um den Anwendungsbereich der Membran-Mikrokoagulation bezogen auf die Art und die Qualität des Abwassers zu definieren.

16. Anlage nach einem der Ansprüche 11 bis 15, **dadurch gekennzeichnet, dass** das Modul (B), um den Arbeitspunkt des Membran-Mikrokoagulationsverfahrens anhand der Sollwerte und der Eingangsvariablen zu setzen, vorgesehen ist, um die Verarbeitung der Informationen sicherzustellen:

- entweder durch einen Block (B1), in dem eine Parametriertabelle in Abhängigkeit von der Qualität des Abwassers gespeichert ist, die ermöglicht, entsprechend den bezüglich des Abwassers gelieferten Daten die Sollwerte zum bevorzugten Einsatz eines Reagenz/der Reagenzien sowie zum optimalen Dosierungsbereich für dieses oder diese Reagenz(ien) zu liefern;
- oder durch einen Block (B2), der ein Expertensystem umfasst, welches Berechnungsmittel und eine Software aufweist, um durch Bewertungsregeln die Kurve zur Aufhebung des Zeta-Potentials in Abhängigkeit von der Dosis des oder der Reagenz(ien) zu modellieren und somit für ein Reagenz oder eine Mischung von Reagenzien die Variablen X, dann X/30 und X/80 zu definieren.

17. Anlage nach einem der Ansprüche 11 bis 16, **dadurch gekennzeichnet, dass** die Steuereinheit (M) ferner ein Modul (C) zur Steuerung der Einleitungsmenge des oder der Koagulationsreagenz(ien) entsprechend der mitgeteilten Bedürfnisse umfasst.

18. Anlage nach Anspruch 17, **dadurch gekennzeichnet, dass** das Steuermodul (C) in zwei logische Steuerblöcke (C1, C2) aufgeteilt ist, die entsprechend der Verfügbarkeit der Informationen für die Steuerung der Einrichtungen zum Einleiten des oder der Koagulationsreagenz(ien) aktiviert werden,

- wobei ein logischer Steuerblock (C1) vorgesehen ist, um einen Betrieb der Reagenzeinleitung entsprechend einem Regelungsmodus sicherzustellen,
- wobei der andere logische Steuerblock (C2) vorgesehen ist, um einen Betrieb der Reagenzeinleitung entsprechend einem Regulierungsmodus sicherzustellen.

M

16                    16

4
                      3                    5

1
14 13 12 11
                      2
                      15
                      J

# FIG.1

M

1                11  2
14 13   12      15   J

16
P          4
6
16

# FIG.2

FIG.3

FIG.5

FIG.4

EP 2 203 243 B1

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1239943 A
- WO 0141906 A
- FR 2867394